# FASCICULE DE BREVET EUROPEEN

(11) **EP 3 472 479 B1**
(45) Date de publication et mention de la délivrance du brevet: **29.04.2020**
(21) Numéro de dépôt: 17737321.4
(22) Date de dépôt: 16.06.2017
(51) Int. Cl.: F16C 7/06

(54) **BIELLE DE LONGUEUR RÉGLABLE POUR TURBOMACHINE**
LÄNGENVERSTELLBARE PLEUELSTANGE FÜR EINE TURBOMASCHINE
CONNECTING ROD WITH VARIABLE LENGTH FOR A TURBOMACHINE

(30) Priorité: 21.06.2016 FR 1655788
(43) Date de publication de la demande: 24.04.2019
(73) Titulaire: Safran Helicopter Engines, 64510 Bordes (FR)
(72) Inventeur: CLADIERE, Mathieu, 77550 Moissy Crayamel (FR); VERGEZ, Stéphane, 77550 Moissy Crayamel (FR)
(74) Mandataire: Gevers & Orès
(86) Numéro de dépôt international: PCT/FR2017/051564
(87) Numéro de publication internationale: WO 2017/220891

(56) Documents cités:
- EP-A1- 2 499 383
- US-A- 5 431 540

## Description

### DOMAINE TECHNIQUE

La présente invention concerne une bielle de longueur réglable pour une turbomachine d'aéronef tel qu'un hélicoptère.

### ETAT DE L'ART

L'état de l'art comprend notamment les documents US-A-5,431,540 et EP-A1-2 499 383.

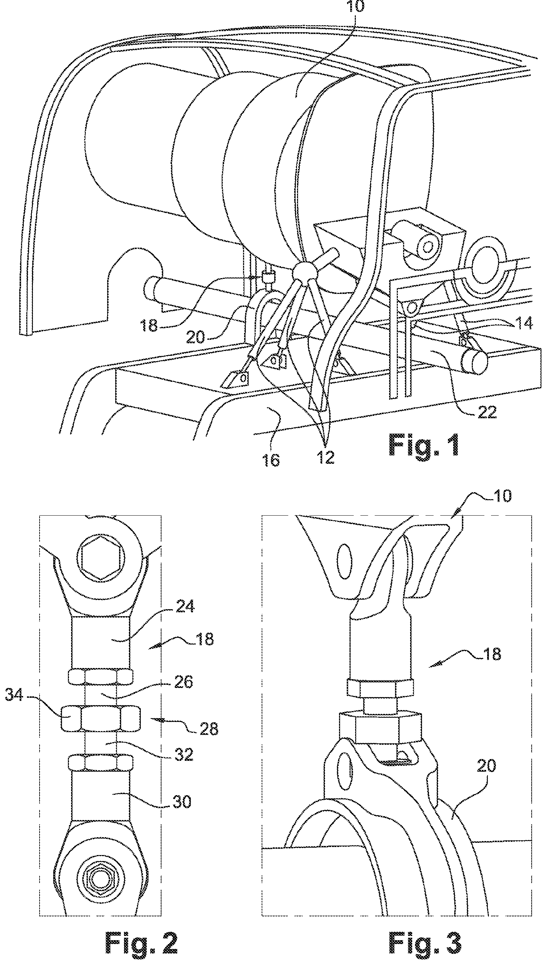

Une turbomachine d'hélicoptère est classiquement montée dans une cellule et fixée à des éléments de structure de l'hélicoptère par des bielles ou analogues. Comme cela est schématiquement représenté à la figure 1 par exemple, la turbomachine 10 est fixée à son extrémité avant ou amont à des premières extrémités longitudinales de bielles 12, 14 dont les secondes extrémités longitudinales opposées sont fixées à un élément de structure 16 de l'hélicoptère. Un tripode ou ensemble de trois bielles 12 relie un premier côté de l'extrémité avant de la turbomachine 10 à l'élément de structure 16, et un bipode ou ensemble de deux bielles 14 relie un second côté opposée de l'extrémité avant de la turbomachine à l'élément de structure 16.

L'extrémité arrière ou aval de la turbomachine 10 est reliée à l'élément de structure 16 par une bielle 18 sensiblement verticale réglable en longueur. Cette bielle s'étend sensiblement à 6h par analogie avec le cadran d'une horloge. Son extrémité longitudinale supérieure est fixée à un élément de la turbomachine 10 et son extrémité longitudinale inférieure est fixée à un arceau 20 en U inversé dont les extrémités libres sont fixées sur l'élément de structure 16 de l'hélicoptère. Cet arceau en U 20 définit un espace de passage d'un arbre 22 d'entraînement du rotor de queue de l'hélicoptère. Le réglage de la longueur de la bielle arrière 18 permet notamment de faire basculer plus ou moins la turbomachine 10 vis-à-vis des bielles avant 12, 14.

Dans la technique actuelle représentée à la figure 2, une première extrémité longitudinale 24 de la bielle 18 comprend un orifice taraudé de vissage d'une portion d'extrémité 26 d'un axe fileté 28, et une seconde extrémité longitudinale 30 de la bielle 18 comprend un orifice taraudé de vissage d'une portion d'extrémité 32 opposée de l'axe fileté 28. L'axe 28 comprend un hexagone 34 entre les portions d'extrémité 28, 32, qui est configuré pour coopérer avec un outil tel qu'une clef afin de déplacer en rotation et visser ou dévisser l'axe 28 vis-à-vis des extrémités 24, 30 de la bielle 18. La rotation de l'axe 28 permet de faire translater les extrémités 24, 30 de la bielle, afin de les rapprocher ou de les éloigner l'une de l'autre et ainsi régler la longueur de la bielle à une valeur souhaitée.

Cependant, en pratique, cette technologie n'est pas entièrement satisfaisante car, bien qu'elle permette de rallonger une bielle à une valeur maximale souhaitée, elle ne permet pas de raccourcir cette même bielle à une valeur minimale souhaitée, par exemple nécessaire pour son intégration dans l'espace (ici vertical) s'étendant entre la turbomachine 10 et l'arceau 20 (figure 3). La plage de réglage peut d'ailleurs être relativement étroite vis-à-vis de la longueur de la bielle. Dans un cas particulier de réalisation, la bielle a une longueur de 126mm, réglable entre -12mm et +12mm (+/-10%).

La présente invention propose une solution à ce problème, qui est simple, efficace et économique.

### EXPOSE DE L'INVENTION

L'invention propose à cet effet une bielle de longueur réglable pour une turbomachine d'aéronef, cette bielle ayant une forme générale allongée et comportant deux extrémités longitudinales opposées de fixation à des éléments à relier, caractérisée en ce que :
- une première de ces extrémités longitudinales est reliée à un premier axe fileté vissé dans une première portion tubulaire d'une douille de réglage,
- une seconde de ces extrémités longitudinales est reliée à un second axe fileté vissé dans une seconde portion tubulaire de la douille de réglage, et comportant en outre un logement dans lequel au moins une partie du premier axe est configuré pour coulisser.

Dans la présente demande, les termes coulisser ou coulissement doivent s'entendre comme le déplacement d'un élément dans un autre élément (ici en l'occurrence du premier axe dans le logement du second axe), sans nécessairement de contact entre ces éléments.

De manière avantageuse, le premier axe peut coulisser dans le second axe. Ceci permet d'augmenter la plage de réglage de la bielle et/ou de réduire sa longueur jusqu'à une valeur relativement faible. Dans un cas particulier de réalisation de l'invention, la bielle a une longueur de 79mm, réglable entre -12mm et +12mm (+/-15%). La bielle selon l'invention permet en outre un gain de masse significatif par rapport à la technique antérieure (environ 35% dans le cas particulier précité).

La bielle selon l'invention peut comprendre une ou plusieurs des caractéristiques suivantes, prises isolément les unes des autres ou en combinaison les unes avec les autres :
- les premier et second axes, la douille et le logement sont coaxiaux,
- un premier contre-écrou est vissé sur le premier axe et est apte à venir en appui sur une extrémité libre de ladite première portion, et un second contre-écrou est vissé sur le second axe et est apte à venir en appui sur une extrémité libre de ladite seconde portion ; ces contre-écrous sont serrés sur la douille pour immobiliser la bielle à une longueur déterminée,
- lesdites extrémités longitudinales comportent chacune un logement dans lequel est montée une rotule traversée par un axe de fixation,
- le premier axe est cylindrique et le second axe est tubulaire,
- les filetages des premier et second axes sont dans des sens opposés,
- les filetages des premier et second axes sont dans des mêmes sens, mais de pas différents,
- la bielle est configurée de façon à ce que les premier et second axes soient déplaçables l'un vis-à-vis de l'autre, par rotation de la douille, depuis une première position dans laquelle les axes sont à distance l'un de l'autre, jusqu'à une seconde position dans laquelle le premier axe est engagé dans le second axe.

La présente invention concerne également une turbomachine d'aéronef, tel qu'un hélicoptère, équipée d'au moins une bielle telle que décrite ci-dessus.

La présente invention concerne encore un aéronef, tel qu'un hélicoptère, comportant une cellule dans laquelle est montée une turbomachine telle que décrite ci-dessus, ladite bielle s'étendant sensiblement verticalement à 6h par analogie avec le cadran d'une horloge, son extrémité longitudinale supérieure étant fixée à un élément de la turbomachine et son extrémité longitudinale inférieure étant fixée à un arceau en U inversé dont les extrémités libres sont fixées sur un élément de structure de l'hélicoptère et qui est traversé par un arbre de rotor de queue de ce dernier.

### DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- la figure 1 est une demi vue schématique partielle en perspective d'un aéronef du type hélicoptère équipée d'une turbomachine,
- les figures 2 et 3 sont des vues schématiques en perspective d'une bielle réglable de la technique antérieure,
- la figure 4 est une vue schématique en coupe axiale d'une bielle selon l'invention,
- la figure 5 est une vue schématique en coupe perspective éclatée d'une bielle selon l'invention,
- les figures 6 et 7 sont des vues schématiques en coupe axiale et en perspective de la bielle de la figure 4, et montrent respectivement deux positions extrêmes de réglage de la bielle, et
- la figure 8 est une vue schématique en perspective de la bielle de la figure 4 dans un environnement de montage.

### DESCRIPTION DETAILLEE

Les figures 1 à 3 ont été décrites dans ce qui précède et illustrent la technique antérieure à la présente invention.

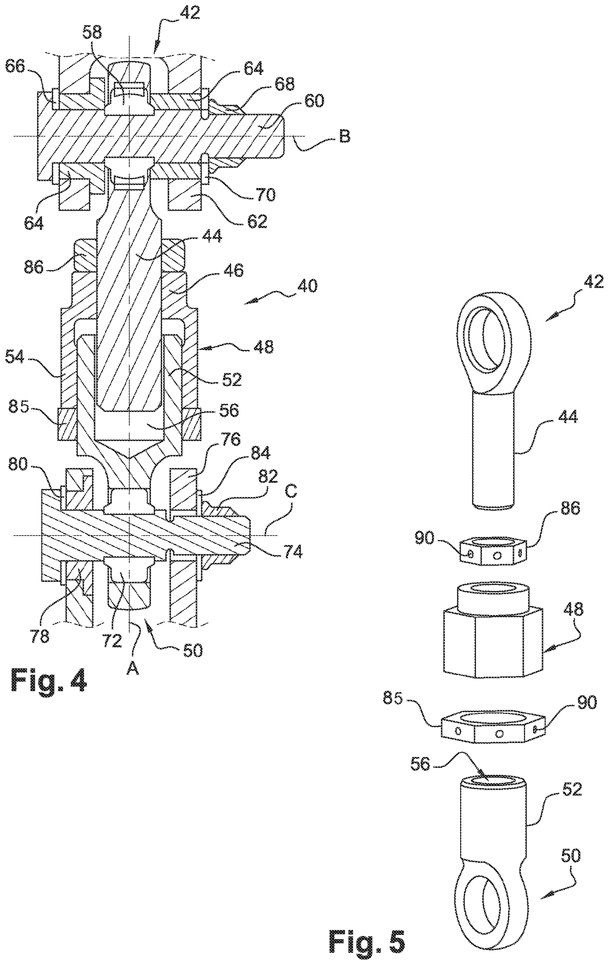

Les figures 4 et suivantes illustrent un mode de réalisation de la bielle 40 selon l'invention, dans lequel :
- une première extrémité longitudinale 42 de la bielle 40 est reliée à un premier axe fileté 44 vissé dans une première portion tubulaire 46 d'une douille de réglage 48, et
- une seconde extrémité longitudinale 50 opposée de la bielle est reliée à un second axe fileté 52 vissé dans une seconde portion tubulaire 54 de la douille 48, cet axe 52 comportant un logement 56 dans lequel au moins une partie du premier axe 44 est configuré pour coulisser lors du réglage de la bielle.

L'axe fileté 44 est solidaire de la première extrémité 42 et est de préférence formé d'une seule pièce avec ce dernier. Le premier axe 44 a une forme allongée d'axe A. Son filetage s'étend sur une majeure partie de sa longueur, jusqu'à son extrémité libre opposée à l'extrémité 42. Cette extrémité 42 comprend un logement dans lequel est montée une rotule 58 traversée par une vis 60. L'extrémité 42 est engagée entre les deux oreilles d'une chape 62 qui comprend des orifices alignés de montage de la vis 60. Des douilles 64 sont montées dans les orifices de la chape 62 et autour de la vis. La vis 60 comprend une tête qui prend appui sur l'une des douilles par l'intermédiaire d'une rondelle 66, et reçoit à son extrémité opposée un écrou 68 qui prend appui sur l'autre douille par l'intermédiaire d'une rondelle 70. La rotule 58 associée au fait que l'épaisseur ou dimension axiale de l'extrémité 42 le long de l'axe B de la vis 60 est inférieure à la distance entre les oreilles de la chape 62 le long du même axe B, autorise des inclinaisons de l'axe 44 vis-à-vis d'un plan perpendiculaire à l'axe B.

De la même façon, l'axe fileté 50 est solidaire de la seconde extrémité 52 et est de préférence formé d'une seule pièce avec ce dernier. Cet axe 50 a une forme allongée le long de l'axe A et est donc coaxial à l'axe 44. Son filetage s'étend sur une majeure partie de sa longueur, jusqu'à son extrémité libre opposée à l'extrémité 52. Cette extrémité 52 comprend un logement dans lequel est montée une rotule 72 traversée par une vis 74. L'extrémité 52 est engagée entre les deux oreilles d'une chape 76 qui comprend des orifices alignés de montage de la vis 74. Au moins une douille 78 est montée dans les orifices de la chape 76 et autour de la vis. La vis 74 comprend une tête qui prend appui sur la douille par l'intermédiaire d'une rondelle 80, et reçoit à son extrémité opposée un écrou 82 qui prend appui sur une autre douille ou l'oreille correspondante de la chape 76 par l'intermédiaire d'une rondelle 84. La rotule 72 associée au fait que l'épaisseur ou dimension axiale de l'extrémité 52 le long de l'axe C de la vis 74 est inférieure à la distance entre les oreilles de la chape 76 le long du même axe C, autorise des inclinaisons de l'axe 52 vis-à-vis d'un plan perpendiculaire à l'axe C.

L'axe 44 et en particulier son filetage a un diamètre externe D1. L'axe 52 et en particulier son logement 56 a un diamètre interne D2, qui est supérieur à D1 pour que l'axe 44 puisse coopérer par coulissement dans le logement 56. Le logement 56 de l'axe 52 a une forme générale cylindrique dans l'exemple représenté. Du fait de ce logement, l'axe 52 a une forme générale tubulaire.

La portion tubulaire 54 de la douille 48 entoure l'axe 52 et comprend une extrémité libre, située du côté de l'extrémité 50, qui est destinée à coopérer par appui avec un contre-écrou 85 vissé sur l'axe 52. C'est ici le même filetage de l'axe 52 qui coopère avec la douille 48 et le contre-écrou 85. L'extrémité opposée de cette portion tubulaire 54 est reliée à la portion tubulaire 46 de la douille, qui entoure l'axe 44. Cette portion tubulaire 46 comprend une extrémité libre, située du côté de l'extrémité 42, qui est destinée à coopérer par appui avec un autre contre-écrou 86 vissé sur l'axe 44. C'est ici le même filetage de l'axe 44 qui coopère avec la douille 48 et le contre-écrou 86.

Dans l'exemple représenté, le logement 56 a une longueur le long de l'axe A qui est configuré pour recevoir au moins une partie et par exemple jusqu'à 50% de la longueur de l'axe 44. La portion tubulaire 54 de la douille 48 a une longueur le long de l'axe A qui est similaire à celle du logement 56 ou du filetage de l'axe 52.

Les filetages des premier et second axes 44, 52 peuvent être dans des sens opposés. En variante, ils sont dans des mêmes sens, mais de pas différents. Pour une rotation donnée de la douille 48, le déplacement des axes 44, 52 sera plus important avec des filetages de sens opposés qu'avec des filetages de même sens et de pas différents. L'avantage du premier cas réside dans le fait qu'une rotation d'un faible angle de la douille peut permettre de déplacer les axes 44, 52 sur une distance significative, et l'avantage du second cas réside dans le fait que le réglage de la position relative des axes peut être plus précis.

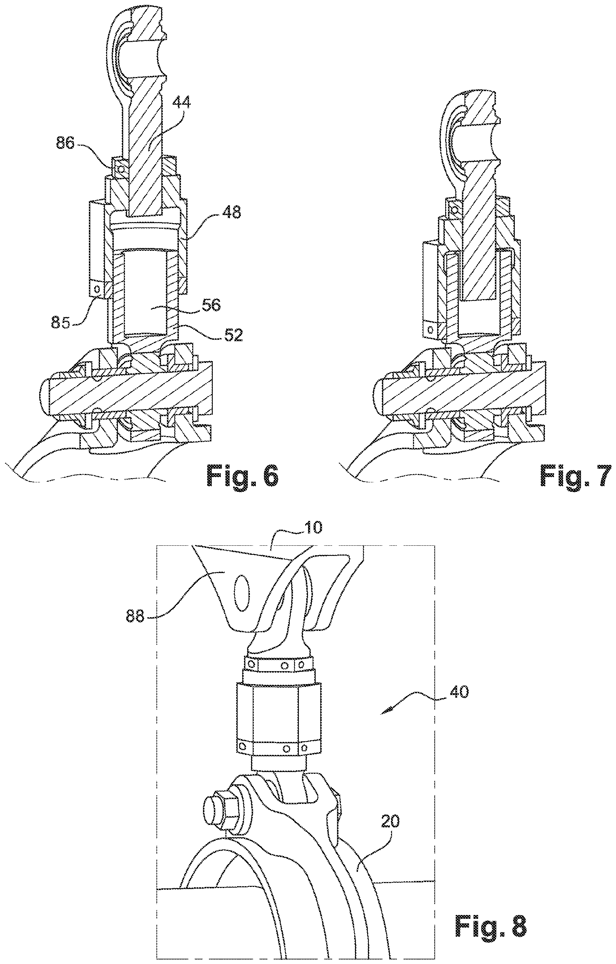

Les figures 6 et 7 montrent la bielle 40 respectivement dans une position allongée maximale et une position rentrée maximale. Autrement dit, la bielle a une longueur maximale dans la figure 6 et une longueur minimale dans la figure 7.

Dans la figure 6, la portion tubulaire 54 de la douille 48 est vissée sur une première partie d'entrée du filetage de l'axe 52 et, de la même façon, la portion tubulaire 46 de la douille 48 est vissée sur une première partie d'entrée du filetage de l'axe 44. La douille est alors positionnée de façon à éloigner le plus possible les axes 44, 52 l'un de l'autre, l'axe 44 n'étant pas engagé dans le logement 56 de l'axe 52.

Dans la figure 7, la portion tubulaire 54 de la douille 48 est vissée jusqu'à une partie de fin du filetage de l'axe 52 et, de la même façon, la portion tubulaire 46 de la douille 48 est vissée sur une partie de fin du filetage de l'axe 44. La douille est alors positionnée de façon à rapprocher le plus possible les axes 44, 52 l'un de l'autre, l'axe 44 étant engagé dans le logement 56 de l'axe 52.

Dans les deux cas représentés, les contre-écrous 85, 86 sont vissés et prennent position en butée sur les extrémités libres respectives de la douille 48 pour la bloquer en rotation vis-à-vis des axes 44, 52. Dans le cas de la figure 7, les contre-écrous 85, 86 sont au voisinage immédiat des extrémités 42, 50 de la bielle.

La figure 8 montre la bielle 40 dans l'environnement correspondant à la figure 1. Elle relie un organe, tel qu'une chape 88, d'une turbomachine 10 à l'arceau 20. On comprend dès lors que la chape 88 forme la chape 62 de la figure 4, et la chape du berceau 20 forme la chape 76 de la figure 4.

On peut également noter sur les figures 5 à 8 que les contre-écrous 84, 85 comprennent des orifices 90 traversant de passage d'au moins un fil-frein pour leur immobilisation en rotation. Un même fil-frein peut par exemple traversé des orifices 90 de deux contre-écrous 84, 85.

Comme évoqué dans ce qui précède, c'est la rotation de la douille 48 qui permet de régler la longueur de la bielle 40. La rotation de la douille peut être réalisée au moyen d'un outil tel qu'une clef. Dans l'exemple représenté, la portion 54 de la douille 48 a en section transversale une forme périphérique non circulaire et par exemple hexagonale en vue de coopérer avec une telle clef.

## Revendications

1. Bielle (40) de longueur réglable pour une turbomachine (10) d'aéronef, cette bielle ayant une forme générale allongée et comportant deux extrémités longitudinales (42, 50) opposées de fixation à des éléments à relier, **caractérisée en ce que** :
- une première (42) de ces extrémités longitudinales est reliée à un premier axe fileté (44) vissé dans une première portion tubulaire (46) d'une douille de réglage (48),
- une seconde (50) de ces extrémités longitudinales est reliée à un second axe fileté (52) vissé dans une seconde portion tubulaire (54) de la douille de réglage, et comportant en outre un logement (56) dans lequel au moins une partie du premier axe est configuré pour coulisser.

2. Bielle (40) selon la revendication principale, dans laquelle les premier et second axes (44, 52), la douille (48) et le logement (56) sont coaxiaux.

3. Bielle (40) selon l'une des revendications précédentes, dans laquelle un premier contre-écrou (86) est vissé sur le premier axe (44) et est apte à venir en appui sur une extrémité libre de ladite première portion (46), et un second contre-écrou (85) est vissé sur le second axe et est apte à venir en appui sur une extrémité libre de ladite seconde portion (54).

4. Bielle (40) selon l'une des revendications précédentes, dans laquelle lesdites extrémités longitudinales (42, 50) comportent chacune un logement dans lequel est montée une rotule (58, 72) traversée par une vis de fixation (60, 74).

5. Bielle (40) selon l'une des revendications précédentes, dans laquelle le premier axe (44) est cylindrique et le second axe (52) est tubulaire.

6. Bielle (40) selon l'une des revendications précédentes, dans laquelle les filetages des premier et second axes (44, 52) sont dans des sens opposés.

7. Bielle (40) selon l'une des revendications 1 à 5, dans laquelle les filetages des premier et second axes (44, 52) sont dans des mêmes sens, mais de pas différents.

8. Bielle (40) selon l'une des revendications précédentes, configurée de façon à ce que les premier et second axes (44, 52) soient déplaçables l'un vis-à-vis de l'autre, par rotation de la douille (48), depuis une première position dans laquelle les axes sont à distance l'un de l'autre, jusqu'à une seconde position dans laquelle le premier axe est engagé dans le second axe.

9. Turbomachine (10) d'aéronef, tel qu'un hélicoptère, équipée d'au moins une bielle (40) selon l'une des revendications précédentes.

10. Aéronef, tel qu'un hélicoptère, comportant une cellule dans laquelle est montée une turbomachine (10) selon la revendication précédente, ladite bielle (40) s'étendant sensiblement verticalement à 6h par analogie avec le cadran d'une horloge, son extrémité longitudinale supérieure étant fixée à un élément de la turbomachine et son extrémité longitudinale inférieure étant fixée à un élément de structure (16) de l'hélicoptère.

## Patentansprüche

1. Pleuel (40) mit einstellbarer Länge für ein Turbomaschinen (10) eines Luftfahrzeugs, wobei dieses Pleuel eine allgemeine gestreckte Form aufweist und zwei einander entgegengesetzte Längsenden (42, 50) zur Befestigung an zu verbindenden Elementen umfasst, **dadurch gekennzeichnet, dass**:
- ein erstes (42) dieser Längsenden mit einem ersten Gewindeachse (44) verbunden ist, der in einen ersten röhrenförmigen Abschnitt (46) einer Einstellhülse (48) geschraubt ist,
- ein zweites (50) dieser Längsenden mit einem zweiten Gewindeachse (52) verbunden ist, der in einen zweiten röhrenförmigen Abschnitt (54) der Einstellhülse geschraubt ist und außerdem mindestens eine Aufnahme (56) umfasst, in der mindestens ein Teil des ersten Gewindeachse zum Gleiten konfiguriert ist.

2. Pleuel (40) nach dem Hauptanspruch, wobei der erste und der zweite Gewindeachse (44, 52), die Hülse (48) und die Aufnahme (56) koaxial sind.

3. Pleuel (40) nach einem der vorstehenden Ansprüche, wobei eine erste Gegenmutter (86) auf den ersten Gewindeachse (44) geschraubt ist und geeignet ist, um auf dem freien Ende des ersten Abschnitts (46) zum Aufliegen zu kommen, und eine zweite Gegenmutter (85) auf den zweiten Gewindeachse geschraubt ist und geeignet ist, um auf einem freien Ende des zweiten Abschnitts (54) zum Aufliegen zu kommen.

4. Pleuel (40) nach einem der vorstehenden Ansprüche, wobei die Längsenden (42, 50) jeweils eine Aufnahme umfassen, in der ein Gelenk (58, 72), das von einer Befestigungsschraube (60, 74) durchquert ist, montiert ist.

5. Pleuel (40) nach einem der vorstehenden Ansprüche, wobei der erste Gewindeachse (44) zylindrisch ist, und der zweite Gewindeachse (52) röhrenförmig ist.

6. Pleuel (40) nach einem der vorstehenden Ansprüche, wobei die Gewinde des ersten und des zweiten Gewindeachsen (44, 52) in eine entgegengesetzte Richtung laufen.

7. Pleuel (40) nach einem der Ansprüche 1 bis 5, wobei die Gewinde des ersten und des zweiten Gewindeachsen (44, 52), in dieselbe Richtung aber mit unterschiedlichen Steigungen laufen.

8. Pleuel (40) nach einem der vorstehenden Ansprüche, das derart konfiguriert ist, dass der erste und der zweite Gewindeachsen (44, 52) zueinander durch Drehen der Hülse (48) von einer ersten Position, in der die Gewindeachsen voneinander entfernt sind, bis zu einer zweiten Position, in der der erste Gewindeachse in den zweiten Gewindeachse eingefügt ist, verlagerbar sind.

9. Turbomaschinen (10) eines Luftfahrzeugs, wie eines Hubschraubers, das mit mindestens einem Pleuel (40) nach einem der vorstehenden Ansprüche ausgestattet ist.

10. Luftfahrzeug, wie ein Hubschrauber, das eine Zelle umfasst, in der ein Turbomaschinen (10) nach dem vorstehenden Anspruch montiert ist, wobei sich das Pleuel (40) im Wesentlichen senkrecht an 6 Uhr durch Analogie mit dem Zifferblatt einer Uhr erstreckt, wobei sein oberes Längsende an einem Element des Turbomaschinen befestigt ist, und sein unteres Längsende an einem Strukturelement (16) des Hubschraubers befestigt ist.

## Claims

1. Adjustable-length connecting rod (40) for an aircraft turbomachine (10), this connecting rod having a generally elongate shape and comprising two opposite longitudinal ends (42, 50) for attachment to elements to be connected, **characterised in that**:
- a first (42) of these longitudinal ends is connected to a first threaded shaft (44) screwed into a first tubular portion (46) of an adjustment sleeve (48),
- a second (50) of these longitudinal ends is connected to a second threaded shaft (52) screwed into a second tubular portion (54) of the adjustment sleeve, and further comprising a housing (56) wherein at least part of the first shaft is configured to slide.

2. Connecting rod (40) according to the main claim, wherein the first and second shafts (44, 52), the sleeve (48) and the housing (56) are coaxial.

3. Connecting rod (40) according to one of the preceding claims, wherein a first locknut (86) is screwed onto the first shaft (44) and is able to bear on a free end of said first portion (46), and a second locknut (85) is screwed onto the second shaft and is capable of bearing on a free end of said second portion (54).

4. Connecting rod (40) according to one of the preceding claims, wherein said longitudinal ends (42, 50) each comprise a housing wherein is mounted a ball joint (58, 72) passed through by an attachment screw (60, 74).

5. Connecting rod (40) according to one of the preceding claims, wherein the first shaft (44) is cylindrical and the second shaft (52) is tubular.

6. Connecting rod (40) according to one of the preceding claims, wherein the threads of the first and second shafts (44, 52) are in opposite directions.

7. Connecting rod (40) according to one of claims 1 to 5, wherein the threads of the first and second shafts (44, 52) are in the same directions, but of different pitches.

8. Connecting rod (40) according to one of the preceding claims, configured so that the first and second shafts (44, 52) are movable one vis-à-vis the other, by rotating the sleeve (48), from a first position wherein the shafts are at a distance from each other, to a second position wherein the first shaft is engaged in the second shaft.

9. Turbomachine (10) for an aircraft, such as a helicopter, equipped with at least one connecting rod (40) according to one of the preceding claims.

10. Aircraft, such as a helicopter, comprising a cell wherein is mounted a turbomachine (10) according to the preceding claim, said connecting rod (40) extending substantially vertically at 6 o'clock by analogy with the dial of a clock, upper longitudinal end thereof being attached to an element of the turbomachine and the lower longitudinal end thereof being attached to a structural element (16) of the helicopter.
